# DEMANDE DE BREVET EUROPEEN

(11) **EP 1 870 683 A1**
(43) Date de publication de la demande: **26.12.2007**
(21) Numéro de dépôt: 06300706.6
(22) Date de dépôt: 20.06.2006
(51) Int. Cl.: G01F 15/00, G01F 1/10

(54) **Agencement de montage d'un élément sur un compteur de fluide**

(71) Demandeur: Actaris SAS, 92100 Boulogne Billancourt (FR)
(72) Inventeur: Bouzid, Tarek, 71000 Macon (FR); Guillot, Denis, 01310 Buellas (FR); Mercier, Alcide, 71960 Serrieres (FR)
(74) Mandataire: Lenne, Laurence

(57) **Abrégé**

L'invention concerne un agencement de montage d'une tête de lecture (5) sur une surface de transfert de données (4A) d'un compteur de fluide, comportant un adaptateur (7) comportant un logement de réception (7A) de cette tête et un agencement d'emboîtement sur la dite surface.

Selon l'invention, ledit adaptateur (7) comporte également un agencement de retenue amovible sur le compteur.

## Description

L'invention concerne un agencement de montage d'une tête de lecture sur un compteur de fluide.

En particulier, dans le cas d'un compteur équipé d'un dispositif de communication, une tête de lecture connectée à un terminal portable doit être appliquée sur le totalisateur du compteur ou un module contenant l'agencement de communication, afin de réaliser par communication une interrogation, une lecture d'une information, telle que un index, une alarme ou un registre ou une programmation du compteur. Le transfert de données du compteur vers la tête de lecture peut par exemple être de type électromagnétique, radio ou optique.

Dans ce qui suit sera appelé compteur, le compteur de fluide en soi ainsi que tout élément éventuellement associé, tel qu'un module de communication.

La surface sur laquelle est fixée la tête de lecture est une surface facilement accessible du compteur et en général la surface portant le dispositif d'affichage de ce dernier.

Il est connu de l'art antérieur d'utiliser un adaptateur afin de réaliser l'application de la tête de lecture sur la surface de transfert de données. Cet adaptateur est constitué d'une pièce cylindrique présentant un logement de réception de la tête de lecture et pourvue d'un agencement de retenue de celle-ci par clipsage. Il comporte par ailleurs un agencement d'emboîtement spécifique à la surface de transfert de données, afin d'assurer un positionnement précis de la tête de lecture sur celle-ci. C'est cet adaptateur qui est alors appliqué sur la surface de transfert de données du compteur et retenu manuellement sur celle-ci par l'opérateur le temps d'opérer à la communication.

Ce mode de montage contraint l'opérateur à travailler d'une seule main pendant le temps de la communication entre le terminal portable et le compteur, puisque son autre main retient l'adaptateur pourvu de la tête de lecture, sur la surface de transfert de données. De plus, ce temps de communication peut être relativement long et cette position être pénible pour l'opérateur.

L'invention résout ce problème et pour ce faire, elle propose un agencement de montage d'une tête de lecture sur une surface de transfert de données d'un compteur de fluide, comportant un adaptateur comportant un logement de réception de cette tête et un agencement d'emboîtement sur la dite surface, caractérisé en ce que ledit adaptateur comporte également un agencement de retenue amovible sur le compteur.

Grâce à l'invention, une fois appliqué sur le compteur, l'adaptateur est retenu en place et les mains et l'attention de l'opérateur sont libérées, ce qui lui permet aisément d'opérer toute action de type lecture ou réglage du terminal portable.

Selon un mode de réalisation préféré, ledit agencement de retenue est constitué d'au moins un élément élastique venant en pression contre une surface du compteur, dite surface de pression, une fois ledit adaptateur disposé sur ce dernier.

Et de préférence, ladite surface de pression est une face du compteur perpendiculaire à ladite surface de transfert.

Ledit élément à déformation élastique peut être constitué d'un poussoir, qui peut être au moins partiellement en matière souple.

Ledit poussoir peut comprendre un ressort de compression.

De préférence, ledit agencement d'emboîtement vient en butée contre une surface du compteur, dite surface de butée et ledit agencement de retenue est disposé de façon à assurer une pression dudit agencement d'emboîtement contre ladite surface de butée.

Avantageusement, ladite surface de butée est perpendiculaire à ladite surface de transfert.

Ledit agencement d'emboîtement peut être constitué d'une bride portée par l'adaptateur.

L'invention est décrite ci-après plus en détail à l'aide de figures ne représentant que des modes de réalisation préférés de l'invention.

La figure 1 est une vue en perspective d'un compteur d'eau pourvu d'un agencement conforme à l'invention.

La figure 2 est une vue en coupe transversale de ce même compteur.

La figure 3 est une vue en perspective d'un agencement de montage d'une tête de lecture conforme à l'invention.

La figure 4 est une vue en coupe transversale d'un premier mode de réalisation d'un agencement de montage conforme à l'invention.

La figure 5 est une vue en coupe transversale d'un deuxième mode de réalisation d'un agencement de montage conforme à l'invention.

Les figures 6A et 6B sont des vues en coupe transversale et en perspective d'un troisième mode de réalisation d'un agencement de montage conforme à l'invention.

La figure 7 est une vue en coupe transversale d'un quatrième mode de réalisation d'un agencement de montage conforme à l'invention.

La figure 8 est une vue en coupe transversale d'un cinquième mode de réalisation d'un agencement de montage conforme à l'invention.

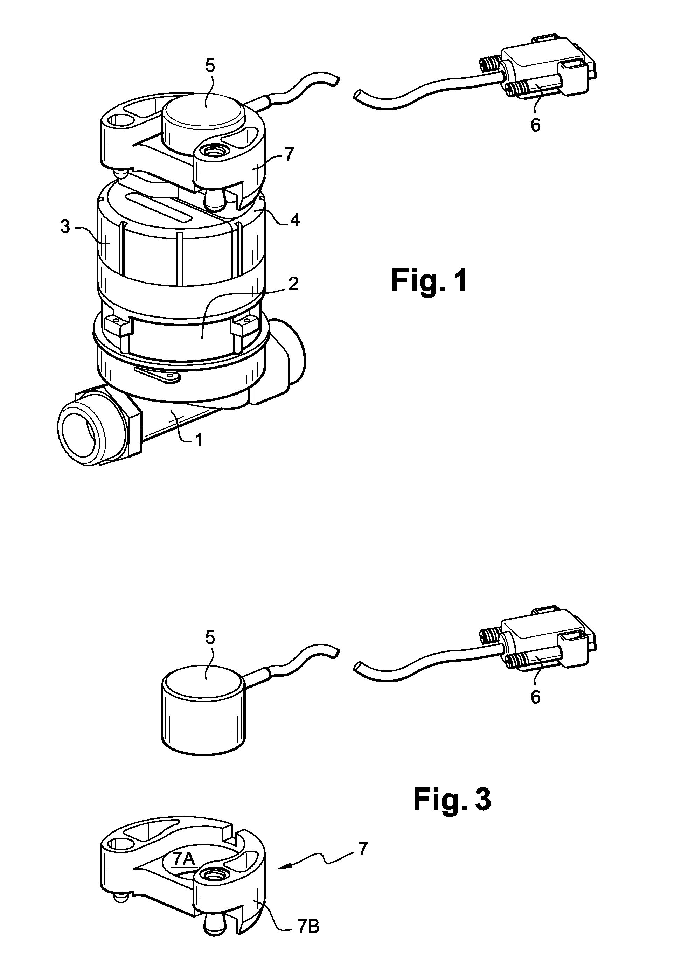

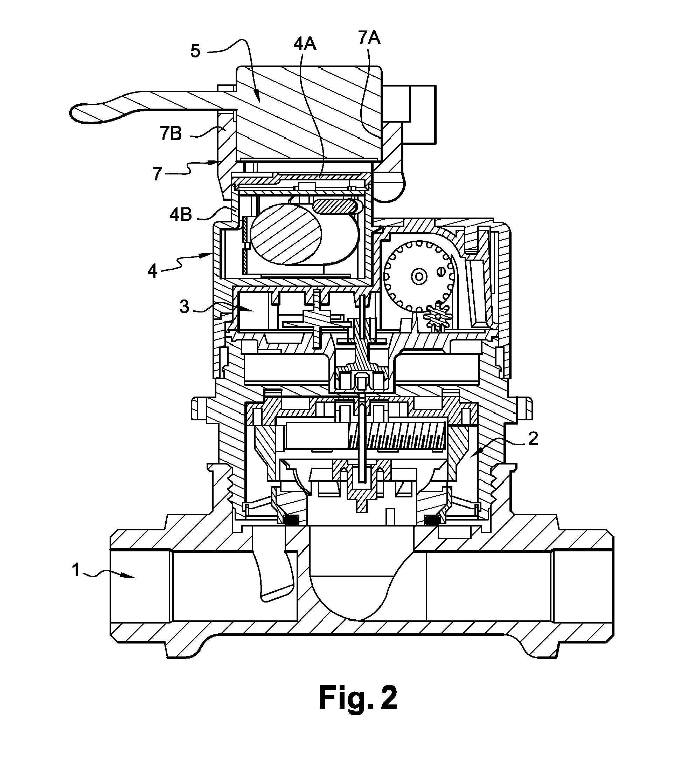

Sur les figures 1 et 2, est représenté un compteur de fluide, et plus précisément un compteur d'eau, équipé d'une tête de lecture 5 destinée à être connectée à un terminal portable.

Ce compteur comporte de façon classique une bâche 1, une chambre de mesure 2, ici à turbine, un totalisateur 3 et un module 4 destiné à la communication avec un terminal portable pour la réalisation d'une interrogation ou d'une lecture d'une information, par exemple.

Une tête de lecture 5 connectée par la fiche 6 à ce terminal est posée sur la surface de transfert de données, qui est selon cet exemple de réalisation, la surface supérieure 4A du module 4, afin de réaliser cette communication de données.

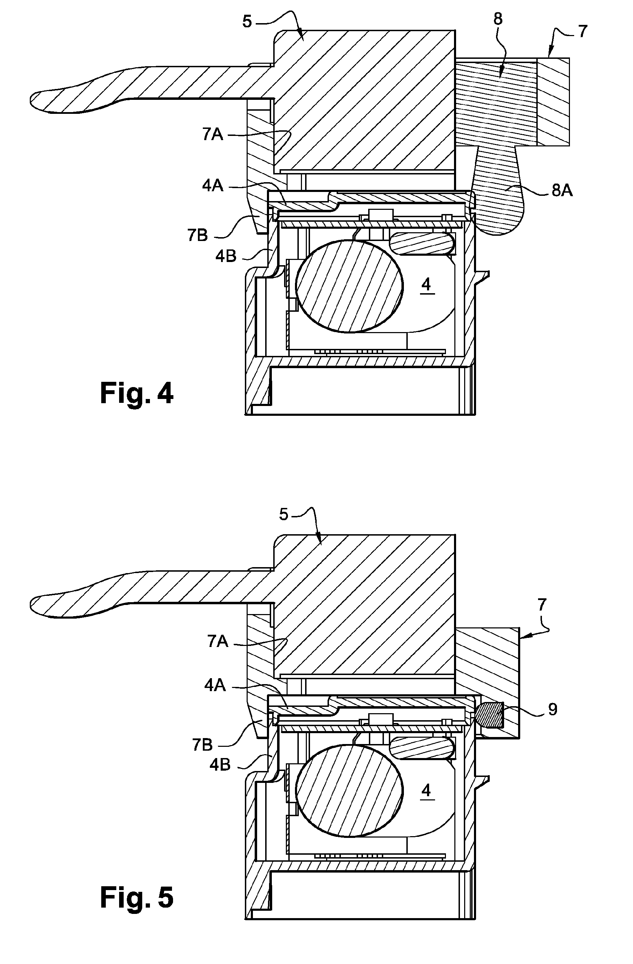

Pour ce faire, comme également visible sur la figure 3, conformément à l'invention, un agencement de montage de cette tête comporte un adaptateur 7 comportant un logement 7A de réception de la tête et un agencement d'emboîtement sur la surface de transfert 4A.

Cet agencement d'emboîtement est constitué d'une bride 7B portée par l'adaptateur et venant en butée contre une surface du compteur, dite surface de butée, perpendiculaire à la surface de transfert 4A, une fois l'adaptateur disposé sur cette dernière. Cette surface de butée est la surface latérale 4B du module 4.

Selon l'invention, l'adaptateur 7 comporte également un agencement de retenue amovible sur le module 4.

Cet agencement de retenue est constitué d'au moins un élément à déformation élastique venant en pression contre une surface du module 4, dite surface de pression, une fois l'adaptateur 7 disposé sur ce dernier. Et de préférence, ladite surface de pression est une face du module 4 perpendiculaire à ladite surface de transfert et plus précisément la face latérale de ce dernier.

Plusieurs modes de réalisation de cet agencement de retenue sont illustrés sur les figures 4 à 8.

Selon un premier mode de réalisation représenté sur la figure 4, l'élément à déformation élastique est constitué d'un poussoir 8, qui est en matière souple, de type caoutchouc. Ce poussoir 8 est conformé comme un pion encastré dans l'adaptateur et comportant une partie 8A en forme de goutte protubérante. Cette partie 8A vient assurer une pression de la bride d'emboîtement 7B contre la surface latérale 4B du module 4, une fois l'adaptateur monté sur le module. Pour assurer cette pression, la partie en forme de goutte 8A du poussoir est dimensionnée en fonction de la matière souple la constituant, de façon à exercer par déformation de cette partie 8A cette pression contre la paroi latérale du compteur.

Selon un deuxième mode de réalisation représenté sur la figure 5, l'élément à déformation élastique est constitué d'un poussoir 9, qui est en matière souple, de type caoutchouc. Ce poussoir 9 est conformé comme un pion encastré dans une paroi latérale de l'adaptateur. Ce pion 9 vient assurer une pression de la bride d'emboîtement 7B contre la surface latérale du module 4, une fois l'adaptateur monté sur le module. Pour assurer cette pression, ce pion est dimensionné en fonction de la matière souple le constituant, de façon à exercer par sa propre déformation cette pression contre la paroi latérale du compteur.

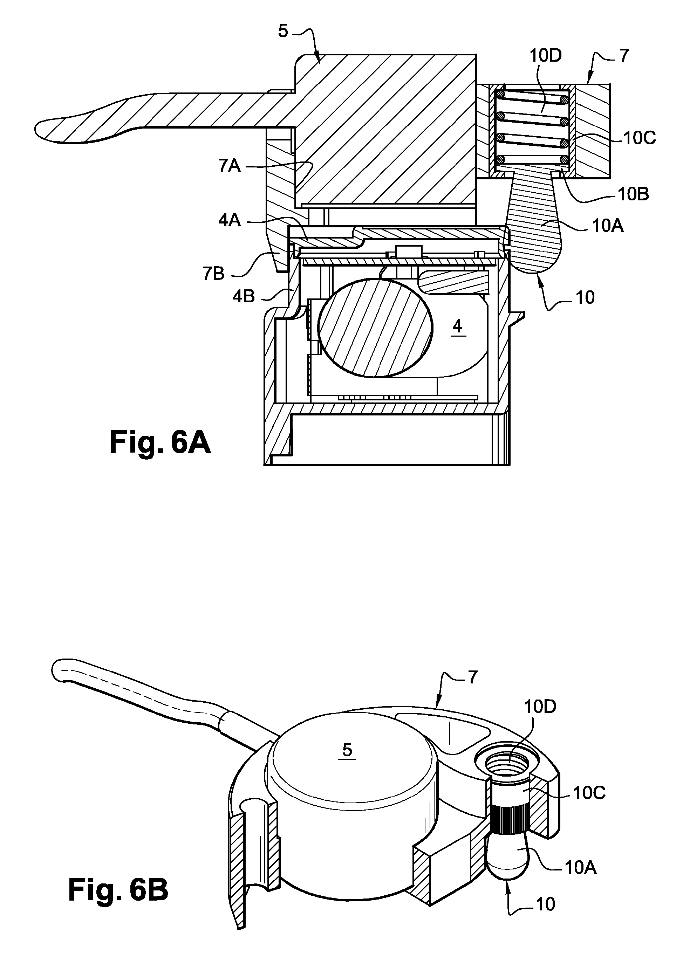

Selon un troisième mode de réalisation représenté sur les figures 6A et 6B, l'élément à déformation élastique est constitué d'un poussoir 10, qui peut être en matière souple ou dure. Ce poussoir 10 est conformé comme un pion en forme de goutte protubérante 10A solidaire d'un disque 10B. Le poussoir 10 est logé dans l'adaptateur par l'intermédiaire une douille 10C renfermant un ressort de compression 10 D exerçant un effort de rappel au niveau du disque 10B contraignant tout déplacement latéral du pion 10A. Ce pion 10A vient assurer une pression de la bride d'emboîtement 7B contre la surface latérale du module 4, une fois l'adaptateur monté sur le module. Pour assurer cette pression, le poussoir 10 est monté dans l'adaptateur 7, de façon à exercer par débattement contraint par le ressort 10D cette pression contre la paroi latérale du compteur.

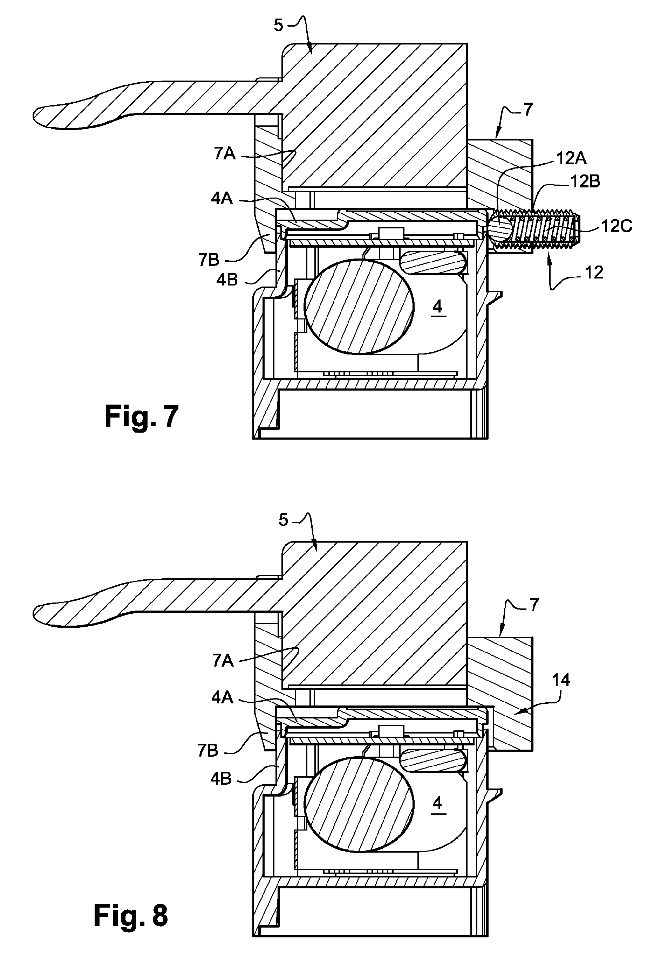

Selon un quatrième mode de réalisation représenté sur la figure 7, l'élément à déformation élastique 12 est constitué d'une bille 12A logée dans une douille 12B elle même logée dans la paroi latérale de l'adaptateur. Un ressort comprimé 12C est disposé à l'intérieur de la douille de façon à venir pousser sur la bille qui vient assurer une pression de la bride d'emboîtement 7B contre la surface latérale du module 4, une fois l'adaptateur monté sur le module. Pour assurer cette pression, la bille 12A coulisse dans la douille 12B, de façon à exercer par débattement contraint par le ressort 12C cette pression contre la paroi latérale du compteur.

Selon un cinquième mode de réalisation représenté sur la figure 8, l'élément à déformation élastique est constitué par une bride 14, qui est en matière souple, de type caoutchouc. Dans ce cas, avantageusement tout l'adaptateur 7 est d'une seule pièce en cette matière souple de type caoutchouc. Cette bride 14 vient assurer une pression de la bride d'emboîtement 7B contre la surface latérale du module 4, une fois l'adaptateur monté sur le module. Cette bride 14 peut être continue avec la bride d'emboîtement 7B.

De façon commune à tous ces modes de réalisation, il est possible de prévoir un ou plusieurs éléments de retenue 8, 9, 10, 12, 14.

L'essentiel est de prévoir des formes de chacun de ces éléments de retenue, à déformation élastique, permettant le centrage, le montage et le démontage rapide et manuel de l'adaptateur 7 sur le module 4. Une fois l'adaptateur en place, la tête de lecture optique 5 doit être en position relative optimale par rapport au module afin d'assurer un transfert correct des données. Ces éléments de retenue induisent un effet de serrage dans la liaison de l'adaptateur 7 sur le module 4, qui assure l'immobilisation de la tête de lecture 5, ce qui permet d'une part à l'opérateur de libérer sa main et d'autre part de rattraper des défauts de géométrie possibles d'un compteur à l'autre.

Selon les exemples décrits, le transfert de données est effectué au moyen d'un module 4 solidaire du compteur. Ce transfert de données peut également être effectué, sans module indépendant, directement sur la surface d'affichage du totalisateur.

## Revendications

1. Agencement de montage d'une tête de lecture (5) sur une surface de transfert de données (4A) d'un compteur de fluide, comportant un adaptateur (7) comportant un logement de réception (7A) de cette tête et un agencement d'emboîtement sur la dite surface, **caractérisé en ce que** ledit adaptateur (7) comporte également un agencement de retenue amovible sur le compteur.

2. Agencement selon la revendication précédente, **caractérisé en ce que** ledit agencement de retenue est constitué d'au moins un élément à déformation élastique venant en pression contre une surface du compteur, dite surface de pression, une fois ledit adaptateur disposé sur ce dernier.

3. Agencement selon la revendication précédente, **caractérisé en ce que** ladite surface de pression est une face du compteur perpendiculaire à ladite surface de transfert (4A).

4. Agencement selon la revendication précédente, **caractérisé en ce que** ledit élément à déformation élastique est constitué d'un poussoir (8, 9, 10,12,14).

5. Agencement selon la revendication précédente, **caractérisé en ce que** ledit poussoir est au moins partiellement en matière souple.

6. Agencement selon la revendication 4 ou 5, **caractérisé en ce que** ledit poussoir (10, 12) comporte un ressort de compression (10D, 12C)

7. Agencement selon l'une des revendications précédentes, **caractérisé en ce que** ledit agencement d'emboîtement vient en butée contre une surface du compteur (4B), dite surface de butée, et **en ce que** ledit agencement de retenue est disposé de façon à assurer une pression dudit agencement d'emboîtement contre ladite surface de butée.

8. Agencement selon la revendication précédente, **caractérisé en ce que** ladite surface de butée est perpendiculaire à ladite surface de transfert (4A).

9. Agencement selon la revendication 7 ou 8, **caractérisé en ce que** ledit agencement d'emboîtement est constitué d'une bride (7B) portée par l'adaptateur.

## Revendications modifiées

### Revendications modifiées conformément à la règle 137(2) CBE.

**1.** Agencement de montage d'une tête de lecture (5) connectée à un terminal, sur une surface de transfert de données (4A) d'un compteur de fluide, comportant un adaptateur (7) comportant un agencement d'emboîtement sur la dite surface et un agencement de retenue amovible sur le compteur, l'adaptateur étant mis en place temporairement sur le compteur durant l'actionnement de ladite tête de lecture, agencement **caractérisé en ce que** ledit adaptateur (7) comporte un logement de réception (7A) par emboîtement de cette tête.

**2.** Agencement selon la revendication précédente, **caractérisé en ce que** ledit agencement de retenue est constitué d'au moins un élément à déformation élastique venant en pression contre une surface du compteur, dite surface de pression, une fois ledit adaptateur disposé sur ce dernier.

**3.** Agencement selon la revendication précédente, **caractérisé en ce que** ladite surface de pression est une face du compteur perpendiculaire à ladite surface de transfert (4A).

**4.** Agencement selon la revendication précédente, **caractérisé en ce que** ledit élément à déformation élastique est constitué d'un poussoir (8, 9, 10, 12, 14).

**5.** Agencement selon la revendication précédente, **caractérisé en ce que** ledit poussoir est au moins partiellement en matière souple.

**6.** Agencement selon la revendication 4 ou 5, **caractérisé en ce que** ledit poussoir (10, 12) comporte un ressort de compression (10D, 12C)

**7.** Agencement selon l'une des revendications précédentes, **caractérisé en ce que** ledit agencement d'emboîtement vient en butée contre une surface du compteur (4B), dite surface de butée, et **en ce que** ledit agencement de retenue est disposé de façon à assurer une pression dudit agencement d'emboîtement contre ladite surface de butée.

**8.** Agencement selon la revendication précédente, **caractérisé en ce que** ladite surface de butée est perpendiculaire à ladite surface de transfert (4A).

**9.** Agencement selon la revendication 7 ou 8, **caractérisé en ce que** ledit agencement d'emboîtement est constitué d'une bride (7B) portée par l'adaptateur.

**10.** Agencement selon l'une des revendications précédentes, **caractérisé en ce que** ladite surface de transfert de données est porté par un module de communication.
